# EUROPÄISCHE PATENTSCHRIFT

(11) **EP 2 961 343 B1**
(45) Veröffentlichungstag und Bekanntmachung des Hinweises auf die Patenterteilung: **17.07.2019**
(21) Anmeldenummer: 14711172.8
(22) Anmeldetag: 27.02.2014
(51) Int. Cl.: A61C 13/34, G01B 11/24, H04N 13/204, A61C 9/00, G01B 11/25, G01B 5/00

(54) **EXTRAORALER DENTALSCANNER**
EXTRAORAL DENTAL SCANNER
SCANNER DENTAIRE EXTRA-ORAL

(30) Priorität: 27.02.2013 DE 102013203312
(43) Veröffentlichungstag der Anmeldung: 06.01.2016
(73) Patentinhaber: Sirona Dental Systems GmbH, 64625 Bensheim (DE)
(72) Erfinder: JUMPERTZ, Rainer, 64625 Bensheim (DE)
(74) Vertreter: Sommer, Peter
(86) Internationale Anmeldenummer: PCT/EP2014/053789
(87) Internationale Veröffentlichungsnummer: WO 2014/131816

(56) Entgegenhaltungen:
- DE-A1- 10 260 670
- DE-A1-102005 016 233
- US-A1- 2007 046 663

## Beschreibung

### Gebiet der Erfindung

Die Erfindung betrifft einen extraoralen Dentalscanner. Bei extraoralen Dentalscannern müssen die zu vermessenden zahntechnischen Formteile während der Aufnahme in geeigneter Lage in einem Messvolumen des Scanners positioniert werden. Unter einem zahntechnisches Formteil werden Zahnmodelle wie z.B. im Artikulator einartikulierte Ober- /Unterkiefermodelle, einzelne Vollkiefermodelle, Einzelzahnmodelle, Teilkiefermodelle, Waxupmodelle, Vollkieferabdrucklöffel, Gegenbissabdrucklöffel verstanden. Um möglichst vollständige lückenlose Daten zu erhalten wird das Modell in unterschiedlichen Ansichten aufgenommen. Dabei sind die abzutastenden Flächen möglichst senkrecht zur optischen Achse der Messkamera auszurichten, um eine gute Datenqualität zu erhalten. Das Messvolumen ist ein virtueller begrenzter Raum, der z.B. die geometrische Form eines annähernden Quaders aufweisen kann, innerhalb dessen die relevanten Oberflächenbereiche des zahntechnischen Formteils mit den optischen Mitteln des Scanners dreidimensional erfasst werden können.

### Stand der Technik

Ein Dentalscanner mit zwei Drehtischen ist aus der DE 10 2005 016233 bekannt.

In der Druckschrift EP 2 229 913 A1 wird beispielsweise eine Vorrichtung bzw. ein Verfahren zum Erstellen von dreidimensionalen Dentalmodellabbildern angegeben, bei dem der Bediener während des Digitalisierungsvorganges des zahntechnischen Formteils die Möglichkeit hat, eine möglichst ideale Position von Gebisshälften bzw. von Dentalmodellhälften zueinander zu erzeugen und diese mittels des Scanners zu erfassen. Vorzugsweise soll auch ermöglicht werden, eine der Realität entsprechende Raumwinkelstellung der Gebisshälften zueinander zu erfassen, wobei die Möglichkeiten der bekannten Streifenlichtscanner erweitert werden. Die beschriebene Vorrichtung weist einen Positionierbereich auf, in welchem beispielsweise ein Artikulator mit darin befindlichen Dentalmodellhälften so angeordnet werden kann, dass der Artikulator mit den Dentalmodellhälften zumindest bereichsweise im Scanbereich des Scanners erfassbar ist. Bei der Positionierung der Zahnmodelle wird nicht eine rein virtuelle Positionierung der einzuscannenden Gebisshälften durchgeführt, sondern mittels der Erfahrung eines Bedieners eine ideale, händische Positionierung der Gebisshälften zueinander realisiert.

Auch beim extraoralen Scanner "InEos Blue", einem Produkt des Unternehmens Sirona Dental Systems GmbH, Bensheim, Deutschland, erfolgt das Abtasten der zahntechnischen Formteile im optischen Messvolumen von Hand, durch Verschieben und Verkippen des Modells auf einem Modellhalter, wie in der DE 10 2004 054 876 A1 oder in der DE 10 2007 030768 A1 beschrieben. Auch zum Fokussieren muss die Messkamera ggf. vor jeder Aufnahme von Hand parallel zu ihrer optischen Achse bewegt werden. Da hier auch das Bildfeld relativ klein ist, müssen insbesondere für das Aufnehmen eines kompletten Kiefermodells sehr viele Einzelaufnahmen gemacht werden. Daher ist sehr viel Interaktion mit dem Gerät erforderlich. Lediglich die Aufnahme von Einzelzahnstümpfen wird hinsichtlich der Rotation motorisch mittels einer Rotationsmaus unterstützt.

### Aufgabe

Aufgabe der Erfindung ist es, einen verbesserten extraoralen Dentalscanner anzugeben.

### Lösung

Diese Aufgabe wird durch die Erfindung mit den Merkmalen des unabhängigen Anspruchs 1 gelöst. Vorteilhafte Weiterbildungen der Erfindung sind in den Unteransprüchen gekennzeichnet. Der Wortlaut sämtlicher Ansprüche wird hiermit durch Bezugnahme zum Inhalt dieser Beschreibung gemacht.

Zur Lösung der Aufgabe wird ein extraoraler Dentalscanner zum dreidimensionalen Erfassen der Oberfläche eines zahntechnischen Formteils vorgeschlagen,
- mit einer 3D-Messkamera zum dreidimensionalen Erfassen der Oberfläche des zahntechnischen Formteils in einem Messvolumen der 3D-Messkamera, wobei die 3D-Messkamera eine optische Achse aufweist;
- mit Mitteln zum Aufnehmen und Positionieren des zahntechnischen Formteils, und
- mit Mitteln zum maschinengesteuerten relativen Positionieren der 3D-Messkamera und des zahntechnischen Formteils
- wobei die Mittel zum maschinengesteuerten relativen Positionieren der 3D-Messkamera und des zahntechnischen Formteils derart ausgebildet sind, dass die Mittel zum Aufnehmen und Positionieren des zahntechnischen Formteils in eine Parkposition außerhalb eines durch die 3D-Messkamera optisch erfassbaren Bereichs verfahren werden können;
- einer Arbeitsplatte zum händischen Positionieren des zahntechnischen Formteils im Messvolumen der 3D-Messkamera, wobei die Arbeitsplatte senkrecht zur optischen Achse ausgerichtet ist und wobei die Arbeitsplatte, von der 3D-Messkamera aus betrachtet, hinter den Mitteln zum Aufnehmen und Positionieren des zahntechnischen Formteils angeordnet ist;
- wobei ein erster Arbeitsbereich für eine automatische Modellpositionierung und ein zweiter Arbeitsbereich für eine händische Positionierung vorhanden ist und wobei die Arbeitsplatte im Arbeitsbereich für die händische Modellpositionierung angeordnet ist;
- wobei der erste und der zweite Arbeitsbereich entlang der selben optischen Achse der 3D-Messkamera angeordnet sind.

Die automatische Positionierung des zahntechnischen Formteils und die 3D-Bildverarbeitung der vom Scanner erfassten Oberflächen des zahntechnischen Formteils erfolgt maschinen- bzw. computergesteuert.

Die Arbeitsplatte zum händischen Positionieren des zahntechnischen Formteils im Messvolumen der 3D-Messkamera ist von der 3D-Messkamera aus betrachtet, hinter den Mitteln zum Aufnehmen und Positionieren des zahntechnischen Formteils angeordnet ist. Die Arbeitsplatte liegt dabei typischerweise in einer Ebene senkrecht zur ersten optischen Achse.

Die Mittel zum maschinengesteuerten relativen Positionieren der 3D-Messkamera und des zahntechnischen Formteils sind derart ausgebildet, dass die Mittel zum Aufnehmen und Positionieren des zahntechnischen Formteils in eine Parkposition außerhalb eines durch die 3D-Messkamera optisch erfassbaren Bereichs verfahren werden können, so dass es ohne Abschattung der Messoptik möglich ist, auf der Arbeitsplatte befindliche Modelle einzusehen und maximalen Freiraum zu schaffen. Dies ist für den händischen Modus besonders wichtig. Dadurch wird erreicht, dass das Modell-Rotations-Modul mit dem Modellteller außerhalb eines durch die 3D-Messkamera zu erfassenden Bildfeldes geparkt und die händische Positionierung des zahntechnischen Formteils nicht behindert wird.

Zur wahlweisen Realisierung einer automatischen oder einer händischen Modellpositionierung (Hybridmodellpositionierung) weist der extraorale Dentalscanner zwei Arbeitsbereiche auf, nämlich einen Arbeitsbereich für eine automatische Modellpositionierung, und einen Arbeitsbereich (Arbeitsebene) für eine händische Modellpositionierung, wobei in der Arbeitsebene für die händische Modellpositionierung die Arbeitsplatte angeordnet ist.

Die händische Positionierung hat den Vorteil des schnellen intuitiven Positionierens des Objektes im Messvolumen, z. B. wenn nur wenige Einzelaufnahmen erforderlich sind, sowie bei zahntechnischen Formteilen, welche beispielsweise aufgrund ihrer Größe von den automatischen Positioniermitteln nicht bewegt werden können. Beim händischen Positioniermodus können auf der Arbeitsplatte beliebige zahntechnische Formteile bis hin zu Modellen, die in große Artikulatoren einartikuliert sind, beispielsweise für eine direkte buccale Aufnahme, von Hand positioniert werden. Dafür werden praktischerweise geeignete Modellhalterungen bzw. -ablagen verwendet. Dieser Modus bietet zeitliche Vorteile, wenn z. B. der relevante Aufnahmebereich klein ist und nur wenige Aufnahmen nötig sind, um ihn komplett zu erfassen.

Die automatische oder maschinengesteuerte Positionierung bietet generell den Vorteil, dass Bildsequenzen bis hin zu kompletten Kiefergeometrien ohne Interaktion aufgenommen werden können. Dabei werden bei den gängigen Typen von Modellen alle relevanten Oberflächen so abgetastet, dass lückenlose Daten entstehen.

Im automatischen oder maschinengesteuerten Positioniermodus können praktisch alle wesentlichen, in Dentallaboren gängigen zahntechnischen Formteile ohne Interaktion durch einen Bediener aufgenommen werden (jedoch keine Modelle in großen Artikulatoren).

Der extraorale Dentalscanner ermöglicht es in dieser Ausgestaltung, sowohl durch automatisches als auch durch händisches Positionieren von zahntechnischen Formteilen unterschiedlicher Größen und Ausführungs-Varianten bei sehr kurzen Aufnahmezeiten lückenlose 3D-Bilddaten aufzunehmen.

Vorteilhafterweise können die Mittel zum maschinengesteuerten relativen Positionieren der 3D-Messkamera und des zahntechnischen Formteils folgende Elemente umfassen:
- ein erstes Kamera-Hub-Modul zum Verschieben der 3D-Messkamera entlang einer ersten linearen Achse;
- ein zweites Kippmodul mit einer zweiten Drehachse;
- ein drittes Schwenkmodul mit einer dritten Drehachse;
- ein viertes Modellhöhen-Ausgleichs-Hubmodul mit einer vierten linearen Achse;
- ein fünftes Modell-Rotations-Modul mit einer fünften Drehachse; und
- einen Modellteller zum Aufnehmen des zahntechnischen Formteils.

Dabei ist das zweite Kippmodul am ersten Kamera-Hub-Modul einseitig und drehbar fixiert, ebenso wie das dritte Schwenkmodul am zweiten Kippmodul einseitig und drehbar fixiert ist. Das vierte Modellhöhen-Ausgleichs-Hubmodul ist am dritten Schwenkmodul verschiebbar fixiert. Das Modell-Rotations-Modul ist derart am Modellhöhen-Ausgleichs-Hubmodul fixiert, dass die fünfte Drehachse des Modell-Rotations-Moduls parallel zur vierten linearen Achse verläuft. Der Modellteller ist drehbar auf dem Modell-Rotations-Modul gelagert, wobei der Mittelpunkt des Modelltellers auf der fünften Drehachse liegt. Die erste lineare Achse, die zweite Drehachse und die dritte Drehachse stehen jeweils senkrecht aufeinander und treffen sich im Mittelpunkt des Messvolumens.

Das vorgeschlagene Fünf-Achsensystem bietet alle benötigen Freiheitsgrade zum Einsehen aller Bereiche eines zahntechnischen Formteils.

Das bei dem vorgeschlagenen extraoralen Dentalscanner verwendete optomechanische Positioniersystem ist ein sehr frei bewegliches spezielles 5-Achsen-Positioniersystem für die Positionierung von Messvolumen der 3D-Meßkamera relativ zu einem zahntechnischen Formteil. Dabei sind die Bewegungsfreiheiten und die Größe sowie die Lage des Messvolumens relativ zum Positioniersystem so aufeinander abgestimmt, dass die relevanten Modellgeometrien von zahntechnischen Formteilen quasi vollständig aus günstigen Einblickwinkeln, nämlich möglichst senkrecht zu den Oberflächen, aufgenommen werden können. Spezielle Achsparameterkombinationen gewähren die Möglichkeit in bestimmten Aufnahmemodi Modellgeometrien systematisch vollständig zu erfassen.

Aufgrund der Konstruktion des extraoralen Dentalscanners kann das Modell so frei bewegt werden, dass man alle Modellbereiche einsehen kann und die optische Achse des Aufnahmesystems dabei möglichst senkrecht zu den aufzunehmenden Flächen steht. Unterschiedliche Modellhöhen werden vom automatischen Positioniersystem so kompensiert, dass das Einspannen ohne Einjustieren durch den Bediener erfolgen kann.

Unterschiedliche Modellhöhen werden in allen Aufnahmemodi durch das separate Linearantriebsmodul als Modell-Höhen-Ausgleichs-Hubmodul automatisch kompensiert.

Wenn die fünfte Drehachse einen Abstand zur ersten linearen Achse hat, wenn die zweite und dritte Drehachse derart eingestellt sind, dass die fünfte Drehachse parallel zur ersten linearen Achse ausgerichtet ist, ermöglicht das das komplette Aufnehmen z. B. eines vollständigen Gebisses durch einfaches Rotieren des Modelltellers.

Die Mittel zum relativen Positionieren der 3D-Messkamera und des zahntechnischen Formteils können vorteilhafter Weise folgende Winkel- und / oder Verfahrbereiche, bezogen auf eine Neutralstellung, aufweisen, nämlich:
a) die erste lineare Achse des ersten Kamera-Hub-Moduls zum Verschieben der 3D-Messkamera entlang der ersten linearen Achse einen Verfahrbereich von plus 25 mm bis minus 170 mm;
b) die zweite Drehachse des zweiten Kippmoduls einen Winkelbereich von plus 60° bis minus 60°;
c) die dritte Drehachse des dritten Schwenkmoduls einen Winkelbereich von plus 60° bis minus 105°;
d) die vierte lineare Achse des vierten Modellhöhen-Ausgleichs-Hubmoduls einen Verfahrbereich von plus 25 mm bis minus 25 mm; und
e) die fünfte Drehachse des fünften Modell-Rotations-Moduls einen Winkelbereich von 360° und / oder eines Vielfachen davon.

Die zweite und dritte Drehachse bilden zusammen eine einseitige Kardan-Aufhängung. Dieses Kardangelenk ermöglicht jeweils eine großzügige Modellverkippung um +/-60° gegenüber der 3D-MeßMesskamera.

Befindet sich ein Punkt der Oberfläche des zahntechnischen Formteils im Schnittpunkt von Achse 2 und Achse 3, dann kann es mittels der Winkelbereiche der zweiten und dritten Drehachse getaumelt werden. Dadurch kann es sehr schnell durch die 3D-Messkamera vermessen werden, ohne dass es aus deren Fokus-Ebene herauswandert und ohne dass die anderen Achsen nachjustiert werden müssen.

Der relevante Oberflächenpunkt des zahntechnischen Formteils bewegt sich bei diesem Taumeln (Taumelscanmodus) nicht aus dem Schnittpunkt der zweiten und dritten Drehachsen heraus. Die Oberfläche des Formteils an diesem Punkt ändert hierbei ihre räumliche Orientierung, aber nicht die räumliche Lage des Punktes. Dadurch können im Taumelscanmodus, z. B. bei Anordnung von mehreren Einzelzahnstümpfen auf dem Modellteller, deren Oberflächen in einer Aufspannung, wie bei einem Einzelzahnrotationsscan, nacheinander rundherum abgetastet werden, ohne dass die Einzelzahnmodelle jeweils einzeln aufgespannt werden müssen. Der Kardangelenkmittelpunkt (Schnittpunkt der zweiten und dritten Drehachsen) befindet sich beim Taumelscanmodus in der Mitte des Messvolumens, wodurch das Modell beim Verkippen nicht aus dem Messvolumen herauswandert

Eine der beiden Kardendrehsachsen, nämlich die dritte Drehachse, kann in einer Richtung bis zu 105° geschwenkt werden, was im Rotationsscanmodus einen Einblick in gegenüber der 3D-Messkamera hinterschnittige Geometrien gewährt, die bei einer Verkippung von nur bis zu 60° nicht erfasst werden könnten.

Von Vorteil ist es, wenn der extraorale Dentalscanner so ausgestaltet ist, dass der Modellteller kreisförmig ist und damit einen Radius hat. Die fünfte Drehachse des Modell-Rotations-Moduls verläuft dabei durch den Mittelpunkt des Modelltellers, und die Diagonale des Bildfeldes der 3D-Messkamera ist mindestens so lang, wie der Radius des Modelltellers. Dadurch wird eine vollständige Erfassung und Vermessung eines auf dem Modellteller angeordneten Objektes erreicht.

Im Rotationsscanmodus mit Hilfe des Modelltellers können z. B. Ganzkiefermodelle sowohl buccal als auch lingual durch Rotation der fünften Drehachse ergänzend zu einer Übersichtsaufnahme aufgenommen werden, was in der Regel zu einer hohen Gesamtdatendichte führt.

Durch ein synchrones Ansteuern des Kamera-Hub-Moduls mit der ersten linearen Achse, des Kippmoduls mit der zweiten Drehachse und des Modell-Rotations-Moduls mit der fünften Drehachse können seitlich ausladende Modelle, welche breiter als das Bildfeld sind, während des Rotationsscans gegenüber der Kamera seitlich bewegt und somit vollständig erfasst werden. Dabei kann die Achse des Modellhöhen-Ausgleichs-Moduls (vierte Achse) als Vorschubachse eingesetzt werden. Auf diese Weise können u. a. Modelle, die länger als die Bildfelddiagonale sind, aufgenommen werden, z. B. lange Waxupmodelle und Tripletrays. Sollten diese bei der Rotation seitlich aus dem Bildfeld herauswandern, so kann dies durch synchrone Bewegung von zweiter und fünfter Achse kompensiert werden.

Günstig ist es, wenn bei dem extraoralen Dentalscanner der Abstand der fünften Drehachse von der ersten linearen Achse mindestens 22 mm und höchstens 26 mm, vorzugsweise 24 mm, beträgt, wenn die zweite und dritte Drehachse derart eingestellt sind, dass die fünfte Drehachse parallel zur ersten linearen Achse ausgerichtet ist. Daraus resultiert ein Versatz des Drehachsenmittelpunktes der fünften Drehachse zum Kardangelenkmittelpunkt (Schnittpunkt zwischen zweiter und dritter Drehachse) bei Neutralposition des Roboterarms.

Dies ermöglicht es, eine Kamera mit einem relativ kleinen Bildfeld einzusetzen. Das Bildfeld der Kamera kann so ausgerichtet werden, dass es in seiner Diagonalen von der Mitte des Modelltellers bis zu dessen Rand reicht. Eine vollständige Aufnahme zum Beispiel eines kompletten Gebisses kann dann durch zusammenfügen mehrerer Aufnahmen bei schrittweiser Rotation des Modelltellers erfolgen.

Eine Kamera mit einem relativ kleinen Bildfeld und festem Fokus ist preislich sehr günstig. Daher kann der vorgeschlagene extraorale Dentalscanner wesentlich günstiger gefertigt werden als dies bisher möglich war.

Für das optische Erfassen der Oberfläche des zahntechnischen Formteils kann die 3D-Messkamera des extraoralen Dentalscanners eine optische Bildaufnahme-Kamera und einen Streifenprojektor aufweist. Das dreidimensionale Erfassen der Oberfläche des zahntechnischen Formteils basiert dann auf dem Prinzip einer flächigen Triangulation, welches sich im Dental-Bereich sehr bewährt hat. Alternativ können auch andere 3D-Messverfahren zum Einsatz kommen, z. B. stereoskopische Aufnahmetechniken.

Unter Triangulation verteht man eine geometrische Methode der optischen Abstandsmessung durch genaue Winkelmessung innerhalb von Dreiecken. Bei Kenntnis der Strahlrichtung und des Abstandes zwischen einer Kamera und einer Lichtquelle kann damit der Abstand von Oberflächenpunkten eines Objekts zur Kamera bestimmt werden. Die Verbindung Kamera-Lichtquelle sowie die beiden Strahlen von und zum Objekt bilden hierbei ein Dreieck, daher die Bezeichnung Triangulation. Mittels dieser Methode kann die dreidimensionale Erfassung, also eine Vermessung der kompletten Oberfläche eines Objektes realisiert werden, was als flächige Triangulation bezeichnet wird.

Die Kamera kann mittels des Kamera-Hub-Moduls (Linearantriebsmodul) entlang der ersten linearen Achse mit Hilfe einer Autofokussteuerung vor jeder Aufnahme ohne händische Interaktion fokussiert werden. Zweckmäßig ist es dazu, dass bei dem extraoralen Dentalscanner das Kamera-Hub-Modul zum automatischen Fokussieren der 3D-Messkamera mit einer Bildverarbeitungs-Einrichtung gekoppelt ist. Der Autofokus bei der 3D-Messkamrea wird hier also nicht durch das Verändern von Linsenabständen innerhalb des Aufnahmeobjektivs realisiert, sondern mittels des linearen Verschiebens der 3D-Messkamera durch ein Linearantriebsmodul entlang der ersten linearen Achse.

Dies ermöglicht den Einsatz einer besonders günstigen Kamera mit einem festen Fokus. Eine solche Kamera kann bei geringen Kosten eine sehr hohe Auflösung der gewonnenen Bilder liefern.

Bei einem händischen Positionieren des zahntechnischen Formteils ist es günstig, dass der vorgeschlagene extraorale Dentalscanner mindestens eine Lichtschranke für ein Grobpositionieren der 3D-Messkamera aufweist. Die Feinpositionierung erfolgt danach mittels der Autofocus-Einrichtung.

Die bei dem vorgeschlagenen extraoralen Dentalscanner realisierte spezielle Kombination aus einer möglichst geringen Größe des Messvolumens (was bei ähnlichem Optikaufwand höhere Messgenauigkeit bedeutet), relativ zu den relevanten Modellgrößen, mit einer Achsenanordnung und Achsverfahrwegen zur quasi freien Relativbewegung von Messvolumen zu Modell, ermöglicht es, beinahe alle relevanten Modellgeometrien sowohl von Hand als auch automatisch in ein und demselben Gerät optisch quasi vollständig aus günstigen Einblickrichtungen abzutasten.

Der vorgeschlagene extraorale Dentalscanner ermöglicht mit seinem optomechanischen Positionier-Achsenkonzept noch weitere, oben bisher nicht genannte spezielle Aufnahmemodi.

In einem Übersichtsaufnahmemodus können z. B. Ganzkiefermodelle und Ganzkieferabdrucklöffel nach Ausgleich der Modellhöhe durch die vierte Achse durch Rotation der fünften Achse in beispielsweise fünf gleich großen Winkelschritten im Wesentlichen quasi komplett erfasst werden.

In einem Zusatzaufnahmemodus können lokalisierte Datenlücken geschlossen werden, indem mittels spezieller Aufnahmeplanung eine für die jeweilige Lücke ideale Achskoordinatenkombination als Einblickrichtung errechnet wird. Dabei wird die sehr freie Beweglichkeit des Achsensystems voll ausgeschöpft, was zu quasi lückenlosen Datensätzen führt.

Weitere Einzelheiten und Merkmale ergeben sich aus der nachfolgenden Beschreibung eines bevorzugten Ausführungsbeispiels in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf das Ausführungsbeispiel beschränkt. So umfassen beispielsweise Bereichsangaben stets alle - nicht genannten - Zwischenwerte und alle denkbaren Teilintervalle.

### Kurzbeschreibung der Zeichnung

Das Ausführungsbeispiel ist in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine Teilansicht (schematisch) des extraoralen Dentalscanners mit den wesentlichen Baugruppen (ohne Gehäuse) und einer Darstellung der Lage des Messvolumens in Relation zu den Positionierachsen;
- Fig. 2A: eine zweite Teilansicht (schematisch) von Baugruppen des extraoralen Dentalscanners mit Darstellung der Lage des Messvolumens in Relation zu den Positionierachsen;
- Fig. 2B: ein vergrößerter Ausschnitt aus Fig. 2A im Bereich des Messvolumens;
- Fig. 3A: eine Teilansicht (schematisch) des extraoralen Dentalscanners mit Darstellung der Lage des Messvolumens bei Ausführung eines Rotationsscans (buccal) eines Vollkiefermodells;
- Fig. 3B: eine Teilansicht (schematisch) des extraoralen Dentalscanners mit Darstellung der Lage des Messvolumens bei Ausführung eines Rotationsscans (lingual) eines Vollkiefermodells;
- Fig. 3C: eine Teilansicht (schematisch) des extraoralen Dentalscanners mit Darstellung der Lage des Messvolumens bei Ausführung einer hinterschnittigen Messung;
- Fig. 4A: eine Teilansicht (schematisch) des extraoralen Dentalscanners mit Darstellung der Lage des Messvolumens bei Ausführung einer hinterschnittigen Messung an einem Einzelzahnmodell im Rotationsscan;
- Fig. 4B: eine Teilansicht (schematisch) des extraoralen Dentalscanners mit Darstellung der Lage des Messvolumens bei Ausführung eines Rotationsscans an einem Einzelzahnmodell;
- Fig. 4C: eine Teilansicht (schematisch) des extraoralen Dentalscanners mit Darstellung der Lage des Messvolumens bei Ausführung eines Rotationsscans am Einzelzahnmodell unter einem anderen Betrachtungswinkel;
- Fig. 5A: eine Teilansicht (schematisch) des extraoralen Dentalscanners mit Darstellung der Lage des Messvolumens bei Ausführung einer hinterschnittigen Messung an einem Brückenzahnmodell;
- Fig. 5B: eine Teilansicht (schematisch) des extraoralen Dentalscanners mit Darstellung der Lage des Messvolumens bei Ausführung eines Rotationsscans an einem Brückenzahnmodell;
- Fig. 5C: eine Teilansicht (schematisch) des extraoralen Dentalscanners mit Darstellung der Lage des Messvolumens bei Ausführung eines Rotationsscans an einem Brückenzahnmodell unter einem anderen Betrachtungswinkel;
- Fig. 6: eine Teilansicht (schematisch) des extraoralen Dentalscanners im Taumelscanmodus bei Ausführung eines Mehrfach-Einzelzahn-Taumelscans;
- Fig. 7A: eine Ansicht (schematisch) des extraoralen Dentalscanners im automatischen Positioniermodus; und
- Fig. 7B: eine Ansicht (schematisch) des extraoralen Dentalscanners im händischen Positioniermodus. Ausführungsbeispiel der Erfindung

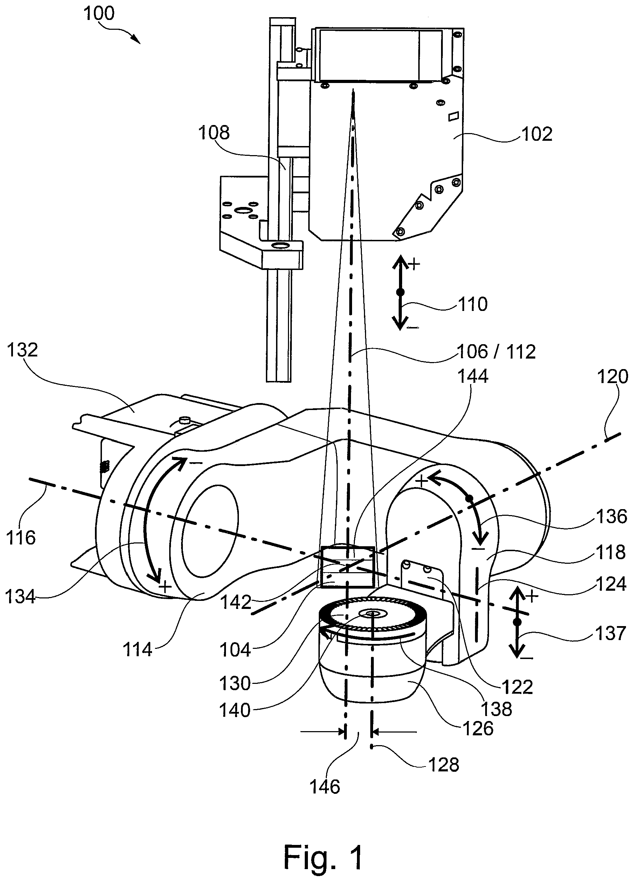

Der in der Teilansicht der Fig. 1 schematisch in Neutralposition dargestellte extraorale Dentalscanner 100 zum dreidimensionalen Erfassen der Oberfläche eines zahntechnischen Formteils weist folgende wesentliche Elemente bzw. Baugruppen auf, die innerhalb eines Gehäuses (nicht dargestellt) angeordnet sind:
- eine 3D-Messkamera 102 zum dreidimensionalen Erfassen der Oberfläche des zahntechnischen Formteils in einem Messvolumen 104 der 3D-Messkamera 102, wobei die 3D-Messkamera 102 eine optische Achse 106 und ein Messvolumen 104 aufweist;
- Mittel zum relativen Positionieren der 3D-Messkamera 102 und des zahntechnischen Formteils, nämlich:
- ein Kamera-Hub-Modul (Linearantriebsmodul) 108 zum senkrechten Verschieben der 3D-Messkamera 102 in beide Richtungen 110 entlang einer linearen Achse 112 (erste Achse), deren Lage mit der der optischen Achse 106 der 3D-Messkamera 102 identisch ist;
- ein Kippmodul 114 mit einer Drehachse 116 (zweite Achse) ;
- ein Schwenkmodul 118 mit einer Drehachse 120 (dritte Achse);
- ein Modellhöhen-Ausgleichs-Hubmodul 122 mit einer linearen Achse 124 (vierte Achse);
- ein Modell-Rotations-Modul 126 mit einer Drehachse 128 (fünfte Achse); und
- einen Modellteller 130 zum Aufnehmen des zahntechnischen Formteils.

Das Messvolumen wird definiert durch das Bildfeld der Kamera (x,y), hier typischerweise 30 mm x 40 mm, mit einer Tiefe entsprechend der Tiefenschärfe der Kamera, hier typischerweise ±10 mm ober- und unterhalb einer Fokusebene.

Das Kamera-Hub-Modul (Linearantriebsmodul) 108 ist als eine ortsfeste Baugruppe ausgebildet, an der die 3D-Messkamera angeordnet ist.

Unterhalb des Kamera-Hub-Moduls 108 ist eine weitere ortsfeste Baugruppe 132 angeordnet, an welcher einseitig und drehbar in zwei Richtungen 134 das Kippmodul 114 fixiert ist. Das Kippmodul 114 hat die Form eines rechten Winkels mit zwei Schenkeln.

Das Schwenkmodul 118 ist am entfernten Schenkel des Kippmoduls 114 einseitig und drehbar in zwei Richtungen 136 fixiert.

Die Kombination Kippmodul 114 / Schwenkmodul 118 ist ähnlich einem Roboterarm ausgestaltet und bildet ein Kardangelenk bzw. einen Kardanarm.

Das Modellhöhen-Ausgleichs-Hubmodul 122 ist am Schwenkmodul 118 linear verschiebbar in zwei Richtungen 137 fixiert.

Das Modell-Rotations-Modul 126 ist dabei am Modellhöhen-Ausgleichs-Hubmodul 122 derart für eine Drehung (Rotation) in einer vorgegeben Richtung 138 fixiert, dass die Drehachse 128 des Modell-Rotations-Moduls 126 parallel zur linearen Achse 124 des Modellhöhen-Ausgleichs-Hubmoduls 122 verläuft. Der Modellteller 130 für die Aufnahme des zahntechnischen Formteils ist drehbar (Rotation) in einer vorgegeben Richtung 138 auf dem Modell-Rotations-Modul 126 gelagert, wobei der Mittelpunkt 140 des Modelltellers 130 auf der Drehachse 128 des Modell-Rotations-Moduls 126 liegt.

Die linearen Achse 112 des Kamera-Hub-Moduls 108 (somit auch die optische Achse 106), die Drehachse 116 des Kippmoduls 114 und die Drehachse 120 des Schwenkmoduls 118 stehen jeweils senkrecht aufeinander und treffen sich im Mittelpunkt 142 des Messvolumens 144.

Die Drehachse 128 des Modell-Rotations-Moduls 126 weist einen Abstand 146 zur optischen Achse der 3D-Messkamera 102 auf, wenn die Drehachse 116 des Kippmoduls 114 und die Drehachse 120 des Schwenkmoduls 118 derart eingestellt sind, dass die Drehachse 128 des Modell-Rotations-Moduls 126 parallel zur optischen Achse 106 der 3D-Messkamera 102 ausgerichtet ist.

Die 3D-Messkamera 102 weist sowohl eine optische Kamera als auch einen Streifenprojektor auf (beide nicht gesondert dargestellt).

Ein Streifenprojektor bzw. eine Streifenprojektion ist Verfahren bzw. Vorrichtung zum berührungslosen optischen Erfassen der dreidimensionalen Form einer Oberfläche eines Objekts. Nach dem Prinzip der Triangulation werden Streifen auf das zu untersuchende Objekt projiziert und von einer Kamera unter einem definierten Winkel detektiert. Die von der Kamera detektierte seitliche Auslenkung der Streifen ist hierbei ein Maß für die Höhe des Objekts bzw. einzelner Oberflächenpunkte des Objektes.

Im automatischen Positioniermodus bewegt das Linearantriebsmodul (Kamera-Hub-Modul) 108 die 3D-Messkamera 102, und somit das Messvolumen 144, mit Hilfe einer Autofokussteuerung vor jeder Aufnahme ohne händische Interaktion entlang der linearen Achse 112 parallel zur optischen Achse 106 der Kamera in den aufzunehmenden Bereich des zahntechnisches Formteils.

Die in Fig. 1 dargestellten Mittel zum relativen Positionieren (Kippmodul 114, Schwenkmodul 118, Modellhöhen-Ausgleichs-Hubmodul 122, Modell-Rotations-Modul 126 mit dem Modellteller 130) des zahntechnischen Formteils können innerhalb bestimmter Bereiche verfahren bzw. gedreht werden. In der nachstehenden Tabelle 1 sind Winkel- bzw. Verfahrbereiche, bezogen auf die in Fig. 1 gezeigte Neutralstellung, aufgeführt:

**Tab. 1**

| Bezugsziffer | Achsenbezeichnung | Neutralstellung | Max. Bereich |
|---|---|---|---|
| 112 | erste lineare Achse | 0 mm | +25 / -170 mm |
| 116 | zweite Drehachse | 0° | +60° / -60° |
| 120 | dritte Drehachse | 0° | +60° / -105° |
| 124 | vierte lineare Achse | 0 mm | +25 / -25 mm |
| 128 | fünfte Drehachse | 0° | n x 360° |

Die Richtungen der Vorzeichen-Konvention sind in Fig. 1 bei den jeweiligen Achsen eingezeichnet.

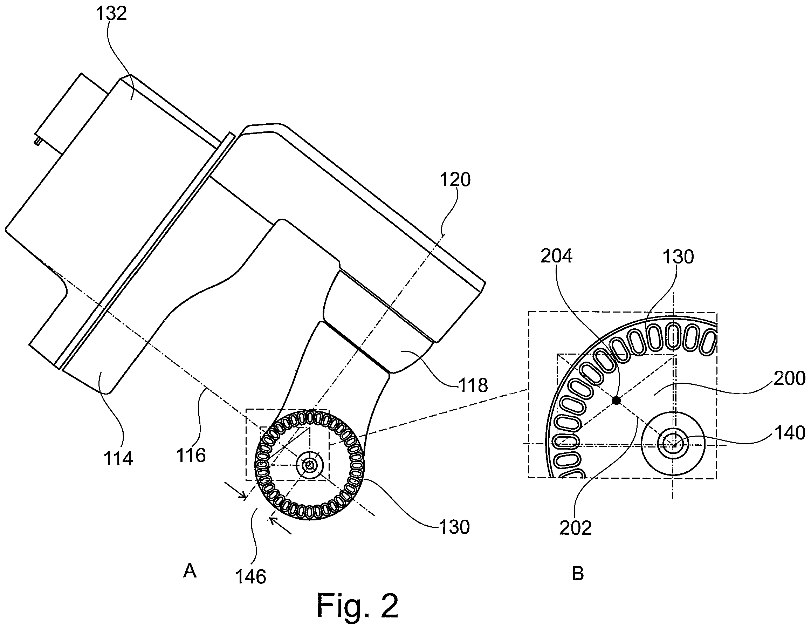

In Fig. 2 wird mittels einer Teilansicht (Ansicht A) der ortsfesten Baugruppe 132 unterhalb des Kamera-Hub-Moduls 108 und der Positioniermittel 114, 118, 126, 130 114 die Lage des Messvolumens 144 bzw. des Bildfeldes 200 demonstriert.

Die Größe des Bildfeldes 200 (Breite x Höhe) beträgt hier 40 mm x 30 mm. Die daraus resultierende Länge der Bildfelddiagonalen 202 beträgt 50 mm. Die Bildfelddiagonale 202 überdeckt hierbei den Radius des Modelltellers 130. Der Bildfeldmittelpunkt 204 ist identisch mit dem Schnittpunkt 142 der Kardanachsen 116, 120.

Der Versatz (Abstand) 146 zwischen der Modellrotationsachse 128 des kreisförmigen Modelltellers 130 einerseits und dem Schnittpunkt 142 der Drehachse 120 des Schwenkmoduls mit der Drehachse 116 des Kippmoduls 114, d. h. im Mittelpunkt 142 des Kardangelenks in Neutralposition des Roboterarms, beträgt 24 mm.

Die Ansicht B der Fig. 2 zeigt einen vergrößerten Ausschnitt aus der Ansicht A zur Darstellung der Lage und Größe des Bildfeldes 200 relativ zum Modellrotationsteller 130. Hierbei trifft sinngemäß die Beschreibung der Ansicht A zu.

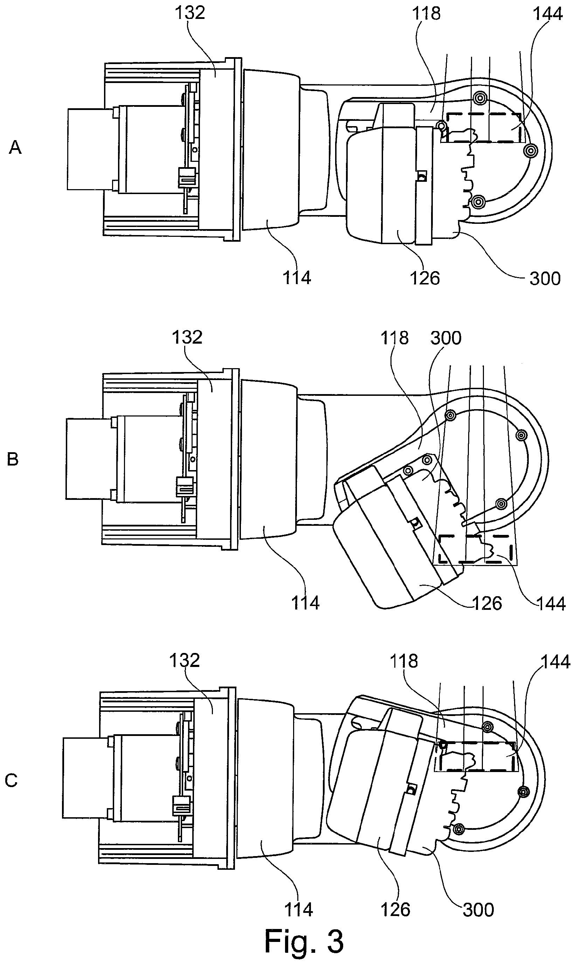

In Fig. 3 wird in drei Teilansichten (Ansichten A, B und C; schematisch) des extraoralen Dentalscanners 100 jeweils eine Lage und winkelbezogene Orientierung der Positioniermittel 108, 114, 118, 126, 130 bzw. des zahntechnischen Formteils 300 bei Ausführung eines Rotationsscans (buccal und lingual) eines als Vollkiefermodell ausgebildeten zahntechnischen Formteils 300 demonstriert.

Das zahntechnische Formteil 300 ist mittels einer z. B. magnetischen Halterung (nicht dargestellt) auf dem Modellteller 130 angeordnet. Das Kippmodul 114 befindet sich bei diesem Modus in Neutralstellung (Drehwinkel der zweiten Drehachse 116 gleich 0°). Die relative Positionierung des zahntechnischen Formteils 300 für das dreidimensionale Erfassen seiner Oberfläche erfolgt in diesem Modus mittels Variation der Koordinaten an der ersten linearen Achse 112 zum Verschieben des Kamera-Hub-Moduls 108, an der Drehachse 120 des Schwenkmoduls 118, an der linearen Achse 124 zum Verschieben des Modellhöhen-Ausgleichs-Hubmoduls 122) und an der Drehachse 128 des Modell-Rotations-Moduls 126. Die Erfassung der Oberfläche des zahntechnischen Formteils 300 erfolgt hierbei sowohl aus buccaler als auch aus lingualer Richtung.

Die in Fig. 3 beispielhaft dargestellten relativen Positionen bzw. Drehwinkel an den Achsen 112, 116, 120, 124, 128 der Positioniermittel 112, 116,120,124,128 relativ zum Messvolumen 144 der 3D-Messkamera 102, sind aus den nachstehenden, jeweils den Ansichten A, B und C zugeordneten Tabellen 2 bis 4 ersichtlich.

**Tab. 2 (Ansicht A)**

| Bezugszeichen | Achsenbezeichnung | Koordinate |
|---|---|---|
| 112 | erste lineare Achse | +10 mm |
| 116 | zweite Drehachse | 0° |
| 120 | dritte Drehachse | -90° |
| 124 | vierte lineare Achse | +10 mm |
| 128 | fünfte Drehachse | 8 x 45° |

**Tab. 3 (Ansicht B)**

| Bezugszeichen | Achsenbezeichnung | Koordinate |
|---|---|---|
| 112 | erste lineare Achse | -62 mm |
| 116 | zweite Drehachse | 0° |
| 120 | dritte Drehachse | -60° |
| 124 | vierte lineare Achse | -18 mm |
| 128 | fünfte Drehachse | 8 x 45° |

**Tab. 4 (Ansicht C)**

| Bezugszeichen | Achsenbezeichnung | Koordinate |
|---|---|---|
| 112 | erste lineare Achse | +10 mm |
| 116 | zweite Drehachse | 0° |
| 120 | dritte Drehachse | -105° |
| 124 | vierte lineare Achse | +10 mm |
| 128 | fünfte Drehachse | 8 x 45° |

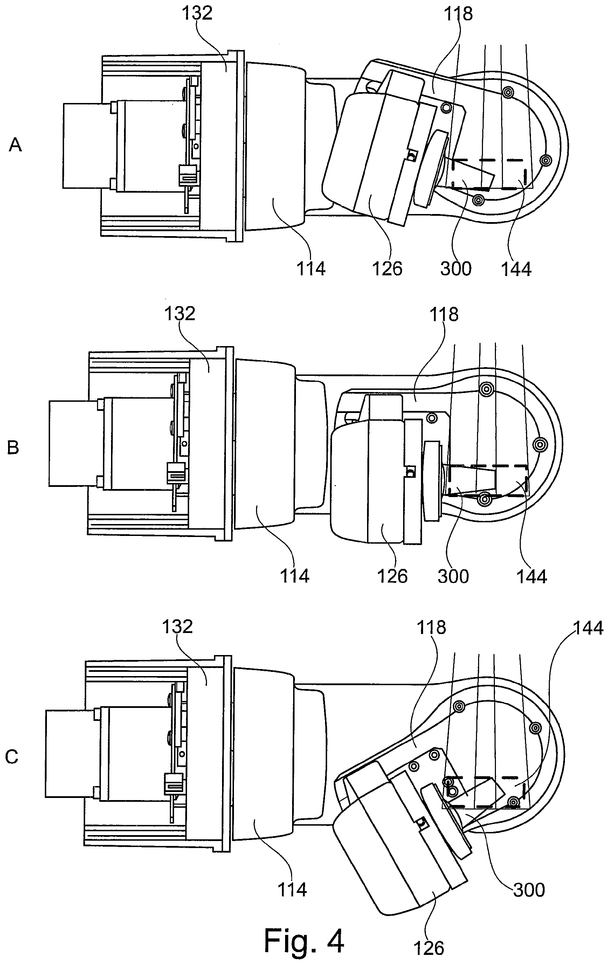

In Fig. 4 wird in drei Teilansichten (Ansichten A, B und C; schematisch) des extraoralen Dentalscanners 100 ebenfalls eine Lage und winkelbezogene Orientierung der Positioniermittel 108, 114, 118, 126, 130 bzw. des zahntechnischen Formteils 300, jedoch hier bei Ausführung eines Rotationsscans an einem als Einzelzahnmodell ausgebildeten zahntechnischen Formteils 300 demonstriert.

Das zahntechnische Formteil 300 ist mittels einer Halterung (nicht dargestellt) auf dem Modellteller 130 angeordnet. Das Kippmodul 114 befindet sich bei diesem Modus ebenfalls in Neutralstellung (Drehwinkel von Achse 2 gleich 0°). Die relative Positionierung des zahntechnischen Formteils 300 für das dreidimensionale Erfassen seiner Oberfläche erfolgt in diesem Modus sinngemäß wie in Fig. 3, hier allerdings mittels Variation der Koordinaten an den Achsen 112, 120, 124, 128 .

Die in Fig. 4 beispielhaft dargestellten relativen Positionen bzw. Drehwinkel 112, 116, 120, 124, 128 an den Achsen der Positioniermittel 108, 114, 118, 126, 130 sind aus den nachstehenden, jeweils den Ansichten A, B und C zugeordneten, Tabellen 5 bis 7 ersichtlich.

**Tab. 5 (Ansicht A)**

| Bezugszeichen | Achsenbezeichnung | Koordinate |
|---|---|---|
| 112 | erste lineare Achse | -20 mm |
| 116 | zweite Drehachse | 0° |
| 120 | dritte Drehachse | -105° |
| 124 | vierte lineare Achse | -10 mm |
| 128 | fünfte Drehachse | 8 x 45° |

**Tab. 6 (Ansicht B)**

| Bezugszeichen | Achsenbezeichnung | Koordinate |
|---|---|---|
| 112 | erste lineare Achse | -20 mm |
| 116 | zweite Drehachse | 0° |
| 120 | dritte Drehachse | -90° |
| 124 | vierte lineare Achse | -10 mm |
| 128 | fünfte Drehachse | 8 x 45° |

**Tab. 7 (Ansicht C)**

| Bezugszeichen | Achsenbezeichnung | Koordinate |
|---|---|---|
| 112 | erste lineare Achse | -25 mm |
| 116 | zweite Drehachse | 0° |
| 120 | dritte Drehachse | -60° |
| 124 | vierte lineare Achse | -18 mm |
| 128 | fünfte Drehachse | 8 x 45° |

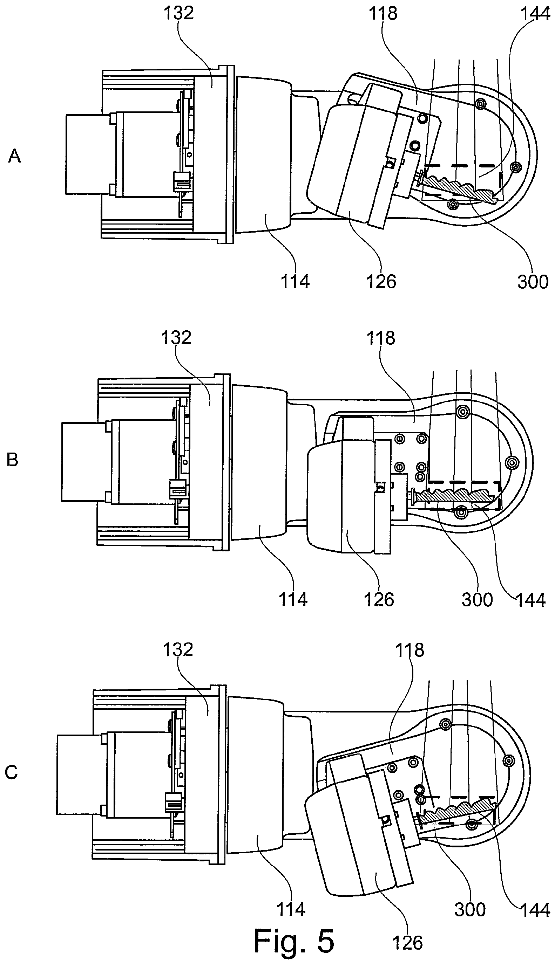

In der Fig. 5 werden in drei weiteren Teilansichten (Ansichten A, B und C; schematisch) des extraoralen Dentalscanners 100 ebenfalls jeweils eine Lage und winkelbezogene Orientierung der Positioniermittel 108, 114, 118, 122, 126 bzw. des zahntechnischen Formteils 306, hier bei Ausführung eines Rotationsscans an einem als Brückenzahnmodell ausgebildeten zahntechnischen Formteils 300, demonstriert.

Das zahntechnische Formteil 300 ist mittels einer Halterung (nicht dargestellt) auf dem Modellteller angeordnet. Das Kippmodul 114 befindet sich bei diesem Modus ebenfalls in Neutralstellung (Drehwinkel von Achse 116 gleich 0°). Auch in diesem Modus erfolgt die relative Positionierung des zahntechnischen Formteils 300 für das dreidimensionale Erfassen seiner Oberfläche sinngemäß wie in den Fig. 3 und 4, hier wiederum mittels Variation der Koordinaten an den Achsen 112, 120, 124, 128.

Die in Fig. 5 beispielhaft dargestellten relativen Positionen bzw. der Drehwinkel an den Achsen der Positioniermittel 108, 114, 118, 122, 126 sind aus den nachstehenden, jeweils den Ansichten A, B und C zugeordneten Tabellen 8 bis 10 ersichtlich.

**Tab. 8 (Ansicht A)**

| Bezugszeichen | Achsenbezeichnung | Koordinate |
|---|---|---|
| 112 | erste lineare Achse | -20 mm |
| 116 | zweite Drehachse | 0° |
| 120 | dritte Drehachse | -105° |
| 124 | vierte lineare Achse | -10 mm |
| 128 | fünfte Drehachse | 8 x 45° |

**Tab. 9 (Ansicht B)**

| Bezugszeichen | Achsenbezeichnung | Koordinate |
|---|---|---|
| 112 | erste lineare Achse | -25 mm |
| 116 | zweite Drehachse | 0° |
| 120 | dritte Drehachse | -90° |
| 124 | vierte lineare Achse | -18 mm |
| 128 | fünfte Drehachse | 8 x 45° |

**Tab. 10 (Ansicht C)**

| Bezugszeichen | Achsenbezeichnung | Koordinate |
|---|---|---|
| 112 | erste lineare Achse | -25 mm |
| 116 | zweite Drehachse | 0° |
| 120 | dritte Drehachse | -75° |
| 124 | vierte lineare Achse | -18 mm |
| 128 | fünfte Drehachse | 8 x 45° |

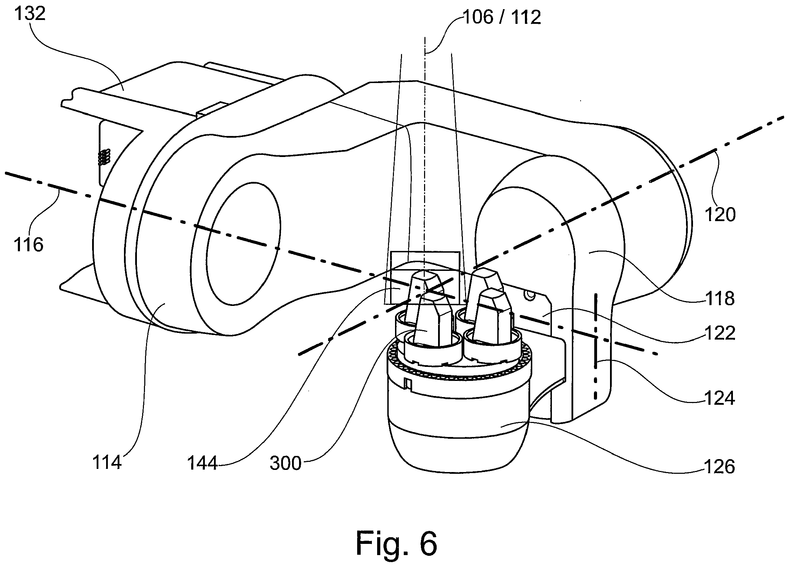

Fig. 6 zeigt eine schematische Teilansicht der ortsfesten Baugruppe 132 sowie der Anordnung von Kippmodul 114, Schwenkmodul 118, Modellhöhen-Ausgleichs-Hubmodul 122 und Modell-Rotations-Modul 126 bei Ausführung eines Mehrfach-Einzelzahnscans. Die als Einzelzahnmodelle (hier beispielsweise vier Einzelzahnmodelle) ausgebildeten zahntechnischen Formteile 300 sind hierbei mittels Halterungen auf dem Modellteller 130 angeordnet. Bei diesem sogenannten "Taumelscanmodus" ist es möglich, durch Variation der Winkel der zweiten und dritten Drehachse 116, 120 eine Änderung der räumlichen Orientierung jedes der zahntechnischen Formteile 300 in einem konkreten Oberflächenpunkt zu realisieren, ohne dabei die räumliche Lage dieses Oberflächenpunktes zu verändern. Somit verbleibt das jeweils zu erfassende Einzelzahnmodell 300 beim Taumelscanmodus ständig innerhalb des Messvolumens. Nacheinander kann auf diese Weise für jedes der auf dem Modellteller 130 angeordneten Einzelzahnmodelle 300 die Oberfläche aus verschiedenen Richtungen durch den Scanner 100 vollständig erfasst werden.

Beim Taumelscanmodus werden z. B. nacheinander die folgenden Winkel des zweiten Kippmoduls 114 und des dritten Schwenkmoduls 118 eingenommen:

**Tab. 11**

| Winkel des zweiten Kippmoduls 114 | Winkel des dritten Schwenkmoduls 118 |
|---|---|
| -60° | -60° |
| 0° | -60° |
| +60° | -60° |
| +60° | 0° |
| +60° | +60° |
| 0° | +60° |
| -60° | +60° |
| -60° | 0° |

Eine Aufnahme, in der sowohl das zweite Kippmodul 114 als auch das dritte Schwenkmodule 118 auf jeweils 0° eingestellt sind, entspricht einer Aufnahme von oben.

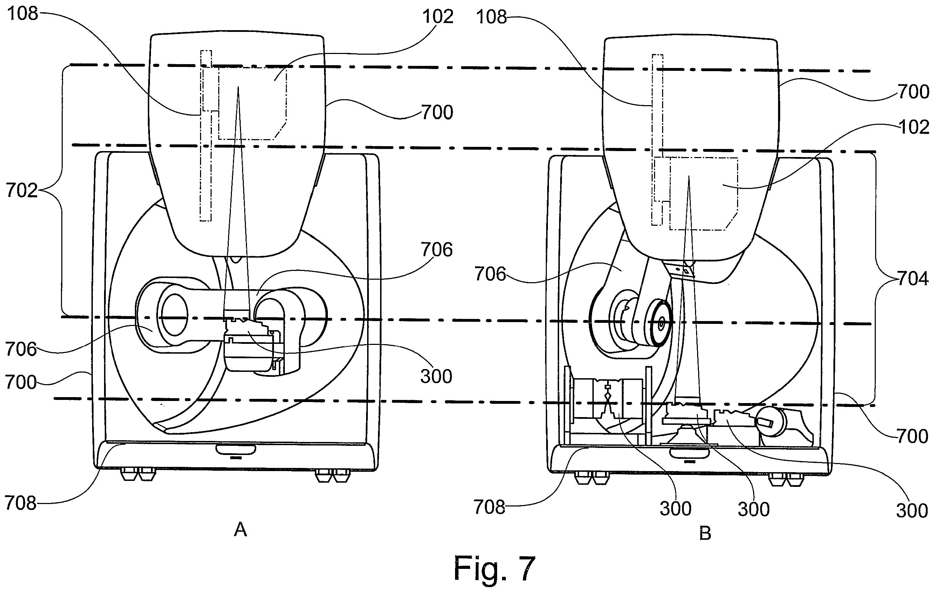

Fig. 7 zeigt den extraoralen Dentalscanner 100 mit den im Gehäuse 700 angeordneten, bereits in Fig. 1 beschriebenen Baugruppen / Elementen, im automatischen Positioniermodus (Ansicht A) und im händischen Positioniermodus (Ansicht B).

Zur Realisierung sowohl des automatischen als auch des händischen Positioniermodus verfügt der extraorale Dentalscanner 100 neben den bereits in Fig. 1 bezeichneten Elementen bzw. Baugruppen über zwei übereinander angeordnete Arbeitsbereiche 702, 704 (bzw. Arbeitsebenen), wobei der obere Arbeitsbereich 702 das Arbeiten im automatischen Positioniermodus (Ansicht A) ermöglicht und der untere Arbeitsbereich 704 das Arbeiten im händischen Positioniermodus (Ansicht B) .

Im automatischen Positioniermodus bewegt das Linearantriebsmodul 108 die 3D-Messkamera 102, und somit das Messvolumen 144, mit Hilfe einer Autofokussteuerung vor jeder Aufnahme ohne händische Interaktion parallel zur optischen Achse der Kamera in den aufzunehmenden Bereich des zahntechnisches Formteils. Dabei befindet sich die 3D-Messkamera 102 im automatischen Positioniermodus im oberen Arbeitsbereich 702. Der Roboterarm 706 mit seinen Positioniermitteln befindet sich in der Darstellung der Ansicht A beispielsweise in der Neutralposition für den Modus "Übersichtsaufnahme".

Zur Realisierung des händischen Positioniermodus (Ansicht B) verfügt der extraorale Dentalscanner 100 weiterhin über eine Arbeitsplatte 708 zum händischen Positionieren eines zahntechnischen Formteils 300. Die Arbeitsplatte 708 ist dabei, von der 3D-Messkamera 102 in Richtung ihrer optischen Achse 106 aus betrachtet, derart hinter dem Modell-Rotations-Modul 126 angeordnet, dass letzteres und die Arbeitsplatte 708 nicht kollidieren können. Die Arbeitsplatte 708 liegt dabei in einer Ebene senkrecht zur optischen Achse 106. Der Roboterarm 706 befindet sich hierzu im händischen Positioniermodus (Ansicht B) in einer "Parkposition".

Bei der in Fig. 7B zu sehenden Parkposition ist das zweite Kippmodul 114 auf +60° eingestellt, das dritte Schwenkmodul 118 auf -105° und das vierte Modellhöhen-Ausgleichs-Hubmodul 122 auf -25 mm komplett nach unten gefahren.

Es können bei der händischen Positionierung zahntechnische Formteile 300 unterschiedliche Ausführungen, incl. solcher unter Verwendung von Artikulatoren, dreidimensional erfasst werden, die auf der Arbeitsplatte angeordnet werden (in Fig. 7, Ansicht B beispielhaft dargestellt). Bei einem händischen Positionieren des zahntechnischen Formteils 300 erfolgt zunächst eine Grobpositionierung der 3D-Messkamera 102 mittels mindestens einer Lichtschranke, während die Feinpositionierung mittels einer Autofokuseinrichtung ausgeführt wird.

Unter einem Artikulator wird ein Gerät zur Simulation der Kiefergelenksbewegung verstanden. Dazu werden Gipsmodelle der Zahnbögen des Ober- und Unterkiefers in Okklusion in den Artikulator montiert. Anschließend kann die Bewegung der Kiefer zueinander simuliert werden.

Ein Bildfeld im Sinne der Beschreibung der Erfindung ist ein Schnitt durch das Messvolumen in der Fokusebene, wobei die Schnittebene senkrecht zur optischen Achse steht.

Eine buccale Aufnahme ist eine backenseitige Aufnahme, eine linguale Aufnahme ist eine zungenseitige Aufnahme.

Ein einseitig und drehbar fixiertes Objekt, also beispielsweise eine Achse, eine Welle, eine Kardanachse, eine Kardanwelle o. ä. ist nur an einem seiner zwei Enden drehbar fixiert bzw. gelagert und wird nur dort angetrieben bzw. gedreht. Das zweite Ende ist nicht auf bzw. nicht an einem weiteren Objekt fixiert bzw. hat kein Auflager.

Eine 3D-Messkamera ist beispielsweise eine optische Kamera zum Erfassen der dreidimensionalen Oberflächenstruktur eines Objekts, z. B. mittels eines Streifenprojektors.

Positioniermittel sind im Sinne der Beschreibung der Erfindung Mittel zum relativen Positionieren der 3D-Messkamera und des zahntechnischen Formteils.

Als Roboterarm 706 im Sinne der Beschreibung der Erfindung wird die Einheit aus Kippmodul 114, Schwenkmodul 118, Modellhöhen-Ausgleichs-Hubmodul 122, Modell-Rotations-Modul 126 und Modellteller 130 bezeichnet.

### Bezugszeichen

- 100: extraoraler Dentalscanner
- 102: 3D-Messkamera
- 104: Messvolumen
- 106: optische Achse
- 108: Kamera-Hub-Modul (Linearantriebsmodul)
- 110: Verfahrbereich der linearen Achse des Kamera-Hub-Moduls
- 112: erste Achse / lineare Achse des Kamera-Hub-Moduls
- 114: Kippmodul
- 116: zweite Achse / Drehachse des Kippmoduls
- 118: Schwenkmodul
- 120: dritte Achse / Drehachse des Schwenkmoduls
- 122: Modellhöhen-Ausgleichs-Hubmodul
- 124: vierte Achse / linearen Achse des Modellhöhen-Ausgleichs-Hubmoduls
- 126: Modell-Rotations-Modul
- 128: fünfte Achse / Drehachse des Modell-Rotations-Moduls
- 130: Modellteller
- 132: ortsfeste Baugruppe des Dentalscanners
- 134: Winkelbereich der Drehachse des Kippmoduls
- 136: Winkelbereich der Drehachse des Schwenkmoduls
- 137: Verfahrbereich der linearen Achse des Modellhöhen-Ausgleichs-Hubmoduls
- 138: Bewegungsrichtung (Drehrichtung) des Modelltellers
- 140: Mittelpunkt des Modelltellers
- 142: Mittelpunkt des Messvolumen (Schnittpunkt von Drehachse des Kippmoduls, Drehachse des Schwenkmoduls und linearer Achse des Kamera-Hub-Moduls)
- 144: Messvolumen
- 146: Versatz (Abstand) zwischen der Modellrotationsachse und dem Schnittpunkt der Drehachse des Schwenkmoduls mit der Drehachse des Kippmoduls (Mittelpunkt des Kardangelenks in Neutralposition)
- 200: Bildfeld
- 202: Bildfelddiagonale
- 204: Bildfeldmittelpunkt
- 300: zahntechnisches Formteil
- 700: Gehäuse
- 702: oberer Arbeitsbereich
- 704: unterer Arbeitsbereich
- 706: Roboterarm (bestehend aus Kippmodul 114, Schwenkmodul 118, Modellhöhen-Ausgleichs-Hubmodul 122, Modell-Rotations-Modul 126 und Modellteller 130)
- 708: Arbeitsplatte

## Patentansprüche

1. Extraoraler Dentalscanner zum dreidimensionalen Erfassen der Oberfläche eines zahntechnischen Formteils (300) mit:
a) einer 3D-Messkamera (102) zum dreidimensionalen Erfassen der Oberfläche des zahntechnischen Formteils (300) in einem Messvolumen (104, 144) der 3D-Messkamera (102), wobei die 3D-Messkamera (102) eine optische Achse (106) aufweist;
b1) Mitteln zum Aufnehmen und Positionieren des zahntechnischen Formteils (300);
b2) Mitteln zum maschinengesteuerten relativen Positionieren der 3D-Messkamera (102) und des zahntechnischen Formteils (300);
c) wobei die Mittel zum maschinengesteuerten relativen Positionieren der 3D-Messkamera (102) und des zahntechnischen Formteils (300) derart ausgebildet sind, dass die Mittel zum Aufnehmen und Positionieren des zahntechnischen Formteils (300) in eine Parkposition außerhalb eines durch die 3D-Messkamera (102) optisch erfassbaren Bereichs verfahren werden können;
d) einer Arbeitsplatte (708) zum händischen Positionieren des zahntechnischen Formteils (300) im Messvolumen (144) der 3D-Messkamera (102),
d1) wobei die Arbeitsplatte (708) senkrecht zur optischen Achse (106) ausgerichtet ist und
d2) wobei die Arbeitsplatte (708), von der 3D-Messkamera (102) aus betrachtet, hinter den Mitteln zum Aufnehmen und Positionieren des zahntechnischen Formteils (300) angeordnet ist;
e) wobei ein erster Arbeitsbereich für eine automatische Modellpositionierung und ein zweiter Arbeitsbereich für eine händische Positionierung vorhanden ist und wobei die Arbeitsplatte im Arbeitsbereich für die händische Modellpositionierung angeordnet ist;
f) wobei der erste und der zweite Arbeitsbereich entlang derselben optischen Achse der 3D-Messkamera angeordnet sind.

2. Extraoraler Dentalscanner nach Anspruch 1, **gekennzeichnet durch**
a1) ein erstes Kamera-Hub-Modul (108) zum Verschieben der 3D-Messkamera (102) entlang einer ersten linearen Achse (112);
a2) ein zweites Kippmodul (114) mit einer zweiten Drehachse (116);
a3) ein drittes Schwenkmodul (118) mit einer dritten Drehachse (120);
a4) ein viertes Modellhöhen-Ausgleichs-Hubmodul (122) mit einer vierten linearen Achse (124);
a5) ein fünftes Modell-Rotations-Modul (126) mit einer fünften Drehachse (128); und
a6) einen Modellteller (130) zum Aufnehmen des zahntechnischen Formteils (300);
b1) wobei das zweite Kippmodul (114) am ersten Kamera-Hub-Modul (108) einseitig und drehbar fixiert ist;
b2) wobei das dritte Schwenkmodul (118) am zweiten Kippmodul (114) einseitig und drehbar fixiert ist;
b3) wobei das vierte Modellhöhen-Ausgleichs-Hubmodul (122) am dritten Schwenkmodul (118) verschiebbar fixiert ist;
b4) wobei das Modell-Rotations-Modul (126) derart am Modellhöhen-Ausgleichs-Hubmodul (122) fixiert ist, dass die fünfte Drehachse (128) des Modell-Rotations-Moduls (126) parallel zur vierten linearen Achse (124) verläuft;
b5) wobei der Modellteller (130) drehbar auf dem Modell-Rotations-Modul (126) gelagert ist, wobei der Mittelpunkt (140) des Modelltellers auf der fünften Drehachse (128) liegt; und
c) wobei die erste lineare Achse (112), die zweite Drehachse (116) und die dritte Drehachse (120) jeweils senkrecht aufeinander stehen und sich im Mittelpunkt (142) des Messvolumens (144) treffen.

3. Extraoraler Dentalscanner nach Anspruch 2, **dadurch gekennzeichnet, dass** die fünfte Drehachse (128) einen Abstand zur ersten linearen Achse (112) hat, wenn die zweite und dritte Drehachse (116, 120) derart eingestellt sind, dass die fünfte Drehachse (128) parallel zur ersten linearen Achse (112) ausgerichtet ist.

4. Extraoraler Dentalscanner nach einem der Ansprüche 2 oder 3, **dadurch gekennzeichnet, dass** die Mittel zum relativen Positionieren der 3D-Messkamera (106) und des zahntechnischen Formteils (300) folgende Winkel- und / oder Verfahrbereiche, bezogen auf eine Neutralstellung, aufweisen, nämlich:
a) die erste lineare Achse (112) des ersten Kamera-Hub-Moduls (108) zum Verschieben der 3D-Messkamera (102) einen Verfahrbereich (110) von plus 25 mm bis minus 170 mm;
b) die zweite Drehachse (116) des zweiten Kippmoduls (114) einen Winkelbereich (134) von plus 60° bis minus 60°;
c) die dritte Drehachse (120) des dritten Schwenkmoduls (118) einen Winkelbereich (136) von plus 60° bis minus 105°;
d) die vierte lineare Achse (124) des vierten Modellhöhen-Ausgleichs-Hubmoduls (122) einen Verfahrbereich (137) von plus 25 mm bis minus 25 mm; und
e) die fünfte Drehachse (128) des fünften Modell-Rotations-Moduls (126) einen Winkelbereich von 360° und / oder eines Vielfachen davon.

5. Extraoraler Dentalscanner nach einem der Ansprüche 2 bis 4, **dadurch gekennzeichnet,**
a) **dass** der Modellteller (130) kreisförmig ist und einen Radius aufweist; und
b) **dass** die 3D-Messkamera (102) ein Bildfeld (200) mit einer Diagonalen (202) aufweist, die mindestens so lang ist, wie der Radius des Modelltellers (130).

6. Extraoraler Dentalscanner nach Anspruch 5, **dadurch gekennzeichnet, dass** der Abstand (146) der fünften Drehachse (128) von der ersten linearen Achse (112) mindestens 22 mm und höchstens 26 mm, vorzugsweise 24 mm, beträgt, wenn die zweite und dritte Drehachse (116, 120) derart eingestellt sind, dass die fünfte Drehachse (128) parallel zur ersten linearen Achse (112) ausgerichtet ist.

7. Extraoraler Dentalscanner nach einem der Ansprüche 1 bis 6, **dadurch gekennzeichnet,**
a) **dass** die 3D-Messkamera (102) eine optische Bildaufnahme-Kamera und einen Streifenprojektor aufweist,
b) wobei das dreidimensionale Erfassen der Oberfläche des zahntechnischen Formteils (300) auf dem Prinzip einer flächigen Triangulation basiert.

8. Extraoraler Dentalscanner nach einem der Ansprüche 2 bis 7, **dadurch gekennzeichnet, dass** das Kamera-Hub-Modul (108) mit einer Bildverarbeitungs-Einrichtung gekoppelt ist zum automatischen Fokussieren der 3D-Messkamera (102).

9. Extraoraler Dentalscanner nach einem der Ansprüche 1 bis 8, **gekennzeichnet durch** mindestens eine Lichtschranke für ein Grobpositionieren der 3D-Messkamera (102) bei einem händischen Positionieren des zahntechnischen Formteils (300).

## Claims

1. Extraoral dental scanner for the three-dimensional acquisition of the surface of a dental shaped part (300) having:
a) a 3D measuring camera (102) for the three-dimensional acquisition of the surface of the dental shaped part (300) in a measurement volume (104, 144) of the 3D measuring camera (102), wherein the 3D measuring camera (102) comprises an optical axis (106);
b1)means for receiving and positioning the dental shaped part (300);
b2)means for the machine-controlled relative positioning of the 3D measuring camera (102) and the dental shaped part (300);
c) wherein the means for the machine-controlled relative positioning of the 3D measuring camera (102) and the dental shaped part (300) are configured such that the means for receiving and positioning the dental shaped part (300) can be moved into a parked position outside a region which can be optically acquired by the 3D measuring camera (102);
d) a work surface (708) for manually positioning the dental shaped part (300) in the measurement volume (144) of the 3D measuring camera (102),
d1) wherein the work surface (708) is oriented perpendicular to the optical axis (106) and
d2) wherein, viewed from the 3D measuring camera (102), the work surface (708) is disposed behind the means for receiving and positioning the dental shaped part (300),
e) wherein a first work area for an automatic positioning of the model and a second work area for a manual positioning are present, and wherein the work surface is disposed in the work area for the manual positioning of the model.
f) wherein the first and the second work area are disposed along the same optical axis of the 3D measuring camera.

2. Extraoral dental scanner according to Claim 1,
**characterized by**
a1) a first camera lift module (108) for moving the 3D measuring camera (102) along a first linear axis (112) ;
a2) a second tilt module (114) having a second axis of rotation (116);
a3) a third pivot module (118) having a third axis of rotation (120);
a4) a fourth model height compensation lift module (122) having a fourth linear axis (124);
a5) a fifth model rotation module (126) having a fifth axis of rotation (128); and
a6) a model plate (130) for receiving the dental shaped part (300);
b1) wherein the second tilt module (114) is unilaterally and rotatably fixed to the first camera lift module (108) ;
b2) wherein the third pivot module (118) is unilaterally and rotatably fixed to the second tilt module (114);
b3) wherein the fourth model height compensation lift module (122) is displaceably fixed to the third pivot module (118);
b4) wherein the model rotation module (126) is fixed to the model height compensation lift module (122) such that the fifth axis of rotation (128) of the model rotation module (126) extends parallel to the fourth linear axis (124);
b5) wherein the model plate (130) is rotatably mounted on the model rotation module (126), wherein the center point (140) of the model plate is located on the fifth axis of rotation (128); and
c) wherein the first linear axis (112), the second axis of rotation (116) and the third axis of rotation (120) are respectively perpendicular to one another and meet at the center point (142) of the measurement volume (144).

3. Extraoral dental scanner according to Claim 2, **characterized in that**, when the second and third axes of rotation (116, 120) are set such that the fifth axis of rotation (128) is aligned parallel to the first linear axis (112), the fifth axis of rotation (128) is spaced apart from the first linear axis (112).

4. Extraoral dental scanner according to any one of Claims 2 or 3, **characterized in that** the means for the relative positioning of the 3D measuring camera (106) and the dental shaped part (300) have the following angle and/or movement ranges with respect to a neutral position, namely:
a) the first linear axis (112) of the first camera lift module (108) has a movement range (110) of plus 25 mm to minus 170 mm for moving the 3D measuring camera (102);
b) the second axis of rotation (116) of the second tilt module (114) has an angle range (134) of plus 60° to minus 60°;
c) the third axis of rotation (120) of the third pivot module (118) has an angle range (136) of plus 60° to minus 105°;
d) the fourth linear axis (124) of the fourth model height compensation lift module (122) has a movement range (137) of plus 25 mm to minus 25 mm; and
e) the fifth axis of rotation (128) of the fifth model rotation module (126) has an angle range of 360° and/or a multiple thereof.

5. Extraoral dental scanner according to any one of Claims 2 to 4, **characterized in that**
a) the model plate (130) is circular and has a radius; and
b) the 3D measuring camera (102) has an image field (200) having a diagonal (202) that is at least as long as the radius of the model plate (130).

6. Extraoral dental scanner according to Claim 5, **characterized in that**, when the second and third axes of rotation (116, 120) are set such that the fifth axis of rotation (128) is aligned parallel to the first linear axis (112), the distance (146) of the fifth axis of rotation (128) from the first linear axis (112) is at least 22 mm and at most 26 mm, preferably 24 mm.

7. Extraoral dental scanner according to any one of Claims 1 to 6, **characterized in that**
a) the 3D measuring camera (102) comprises an optical image recording camera and a fringe projector,
b) wherein the three-dimensional acquisition of the surface of the dental shaped part (300) is based on the principle of planar triangulation.

8. Extraoral dental scanner according to any one of Claims 2 to 7, **characterized in that** the camera lift module (108) is coupled to an image processing device for automatically focusing the 3D measuring camera (102).

9. Extraoral dental scanner according to any one of Claims 1 to 8, **characterized by** at least one light barrier for the rough positioning of the 3D measuring camera (102) in a manual positioning of the dental shaped part (300).

## Revendications

1. Scanner dentaire extra-oral destiné au relevé tridimensionnel de la surface d'un moulage prothétique dentaire (300), comprenant :
a) une caméra de mesure 3D (102) destinée au relevé tridimensionnel de la surface du moulage prothétique dentaire (300) dans un volume de mesure (104, 144) de la caméra de mesure 3D (102), ladite caméra de mesure 3D (102) présentant un axe optique (106) ;
b1) des moyens de réception et de positionnement du moulage prothétique dentaire (300),
b2)des moyens de positionnement relatif à commande par machine de la caméra de mesure 3D (102) et du moulage prothétique dentaire (300),
c) lesdits moyens de positionnement relatif à commande par machine de la caméra de mesure 3D (102) et du moulage prothétique dentaire (300) étant conçus de sorte que les moyens de réception et de positionnement du moulage prothétique dentaire (300) puissent être déplacés dans une position de stationnement extérieure à une zone de relevé optique couverte par la caméra de mesure 3D (102) ;
d) une plaque de travail (708) destinée au positionnement manuel du moulage prothétique dentaire (300) dans le volume de mesure (144) de la caméra de mesure 3D (102),
d1) ladite plaque de travail (708) étant perpendiculaire à l'axe optique (106), et
d2) ladite plaque de travail (708), vue depuis la caméra de mesure 3D (102), étant disposée derrière les moyens de réception et de positionnement du moulage prothétique dentaire (300) ;
e) une première zone de travail pour un positionnement automatique du modèle et une deuxième zone de travail pour un positionnement manuel étant disponibles, ladite plaque de travail étant disposée dans la zone de travail pour positionnement manuel du modèle ;
f) ladite première et ladite deuxième zone de travail se situant le long du même axe optique de la caméra de mesure 3D.

2. Scanner dentaire extra-oral selon la revendication 1, **caractérisé par**
a1) un premier module de course de caméra (108) pour le déplacement de la caméra de mesure 3D (102) le long d'un premier axe linéaire (112) ;
a2) un deuxième module de basculement (114) présentant un deuxième axe de rotation (116) ;
a3) un troisième module de pivotement (118) présentant un troisième axe de rotation (120) ;
a4) un quatrième module de course de compensation de hauteur de modèle (122) présentant un quatrième axe linéaire (124) ;
a5) un cinquième module de rotation de modèle (126) présentant un cinquième axe de rotation (128) ; et
a6) une platine de modèle (130) destinée à la réception du moulage prothétique dentaire (300) ;
b1) ledit deuxième module de basculement (114) étant fixé d'un côté sur le premier module de course de caméra (108) et étant rotatif ;
b2) ledit troisième module de pivotement (118) étant fixé d'un côté sur le deuxième module de basculement (114) et étant rotatif ;
b3) ledit quatrième module de course de compensation de hauteur de modèle (122) étant fixé sur le troisième module de pivotement (118) de façon à pouvoir être déplacé ;
b4) ledit module de rotation de modèle (126) étant fixé sur le module de course de compensation de hauteur de modèle (122) de sorte que le cinquième axe de rotation (128) du module de rotation de modèle (126) soit parallèle au quatrième axe linéaire (124) ;
b5) ladite platine de modèle (130) étant disposée rotative sur le module de rotation de modèle (126), le centre (140) de la platine de modèle reposant sur le cinquième axe de rotation (128) ; et
c) lesdits premier axe linéaire (112), deuxième axe de rotation (116) et troisième axe de rotation (120) étant respectivement perpendiculaires les uns aux autres et se croisant au niveau du centre (142) du volume de mesure (144).

3. Scanner dentaire extra-oral selon la revendication 2, **caractérisé en ce que** le cinquième axe de rotation (128) est espacé du premier axe linéaire (112) lorsque les deuxième et troisième axes de rotation (116, 120) sont réglés de sorte que le cinquième axe de rotation (128) soit orienté parallèle au premier axe linéaire (112).

4. Scanner dentaire extra-oral selon une des revendications 2 et 3, **caractérisé en ce que** les moyens de positionnement relatif de la caméra de mesure 3D (106) et du moulage prothétique dentaire (300) présentent, par rapport à une position neutre, les plages angulaires et/ou de déplacement suivantes :
a) le premier axe linéaire (112) du premier module de course de caméra (108) pour le déplacement de la caméra de mesure 3D (102) : une plage de déplacement (110) de plus 25 mm à moins 170 mm ;
b) le deuxième axe de rotation (116) du deuxième module de basculement (114) : une plage angulaire (134) de plus 60° à moins 60° ;
c) le troisième axe de rotation (120) du troisième module de pivotement (118) : une plage angulaire (136) de plus 60° à moins 105° ;
d) le quatrième axe linéaire (124) du quatrième module de course de compensation de hauteur de modèle (122) : une plage angulaire (137) de plus 25 mm à moins 25 mm ; et
e) le cinquième axe de rotation (128) du cinquième module de rotation de modèle (126) : une plage angulaire de 360° et/ou un multiple de celui-ci.

5. Scanner dentaire extra-oral selon une des revendications 2 à 4, **caractérisé en ce que**
a) la platine de modèle (130) est circulaire et présente un rayon, et
b) la caméra de mesure 3D (102) présente un champ de vision (200) avec une diagonale (202) qui est au moins aussi longue que le rayon de la platine de modèle (130).

6. Scanner dentaire extra-oral selon la revendication 5, **caractérisé en ce que** la distance (146) du cinquième axe de rotation (128) par rapport au premier axe linéaire (112) est d'au moins 22 mm et d'au plus 26 mm, de préférence de 24 mm, lorsque les deuxième et troisième axes de rotation (116, 120) sont réglés de telle sorte que le cinquième axe de rotation (128) soit orienté parallèle au premier axe linéaire (112).

7. Scanner dentaire extra-oral selon une des revendications 1 à 6, **caractérisé en ce que**
a) la caméra de mesure 3D (102) présente une caméra optique pour prise de clichés ainsi qu'un projecteur de franges ;
b) le relevé tridimensionnel de la surface du moulage prothétique dentaire (300) reposant sur le principe de la triangulation plane.

8. Scanner dentaire extra-oral selon une des revendications 2 à 7, **caractérisé en ce que** le module de course de caméra (108) est couplé à un dispositif de traitement d'image pour la mise au point automatique de la caméra de mesure 3D (102).

9. Scanner dentaire extra-oral selon une des revendications 1 à 8, **caractérisé par** au moins une barrière lumineuse pour un positionnement grossier de la caméra de mesure 3D (102) lors d'un positionnement manuel du moulage prothétique dentaire (300).
